# Europäisches Patentamt
# European Patent Office
# Office européen des brevets

(19)

(11) Veröffentlichungsnummer: **0 296 498 B1**

(12)

# EUROPÄISCHE PATENTSCHRIFT

(45) Veröffentlichungstag der Patentschrift: **03.06.92**

(51) Int. Cl.5: **G05B 23/02**, G05B 13/02

(21) Anmeldenummer: **88109676.2**

(22) Anmeldetag: **16.06.88**

(54) **Einrichtung zum Identifizieren von Übertragungsstrecken,insbesondere von Regelstrecken.**

(30) Priorität: **26.06.87 DE 3721184**

(43) Veröffentlichungstag der Anmeldung:
**28.12.88 Patentblatt 88/52**

(45) Bekanntmachung des Hinweises auf die
Patenterteilung:
**03.06.92 Patentblatt 92/23**

(84) Benannte Vertragsstaaten:
**AT DE FR GB**

(56) Entgegenhaltungen:
**EP-A- 0 150 762**
**DE-A- 2 335 788**

**PROCEEDINGS OF THE 25TH IEEE CONFE-
RENCE ON DECISION AND CONTROL, 12 Dezember 1986, Athen, Griechenland; S.NOLD
& R.ISERMAN: "Identifiability of Process coefficients for technical failure diagnosis"**

**"Siemens Energie und Automation", 8 Jahrgang 1986, Heft 5, Seiten 339 bis 341**

(73) Patentinhaber: **SIEMENS AKTIENGESELL-
SCHAFT**
**Wittelsbacherplatz 2**
**W-8000 München 2(DE)**

(72) Erfinder: **Preuss, Hans-Peter, Dr.-Ing**
**Wattkopfstrasse 68**
**W-7500 Karlsruhe 21(DE)**

Rank Xerox (UK) Business Services

**Beschreibung**

Einrichtung zur Parameteridentifikation einer Übertragungsstrecke, insbesondere einer Regelstrecke

Die Erfindung betrifft eine Einrichtung zur Parameteridentifikation einer Übertragungsstrecke, insbesondere einer Regelstrecke gemäß dem Oberbegriff des Anspruchs 1.

In der Zeitschrift "Siemens Energie und Automation", 8. Jahrgang (1986), Heft 5, Seiten 339 bis 341 ist ein Verfahren zur Prozeßidentifikation beschrieben, bei dem als Regelstreckenmodell ein Verzögerungsglied n-ter Ordnung mit gleichen Zeitkonstanten zugrunde gelegt wird. Mit diesem Verfahren können zwar die Parameter eines Verzögerungsgliedes einfach gewonnen werden, jedoch genügt für viele Fälle der einfache Modellansatz nicht, vor allem dann, wenn Zustandsregler entworfen werden sollen, die eine das dynamische Verhalten der Regelstrecke sehr genau wiedergebende mathematische Beschreibung erfordern.

Aus der DE-PS 23 35 788 ist ein selbsteinstellender Regler bekannt, der an beliebige, also auch an nichtlineare und zeitvariante Regelstrecken anpaßbar sein soll, deren Parameter zunächst nicht bekannt sind. Die Ermittlung dieser Parameter (Identifikation der Regelstrecke) ist bei dem bekannten Regler jedoch sehr aufwendig und kompliziert sowie für den Praktiker schwer durchschaubar, was seine Anwendbarkeit beeinträchtigt.

Der vorliegenden Erfindung liegt die Aufgabe zugrunde, eine Einrichtung zur Parameteridentifikation linearer Übertragungsstrecken anzugeben, die durch eine unkritische numerische Auswertung der gemessenen Übergangsfunktion die Koeffizienten des Zähler- und des Nennerpolynoms einer allgemeinen gebrochen rationalen Übertragungsfunktion liefert.

Erfindungsgemäß wird diese Aufgabe mit den im kennzeichnenden Teil des Anspruchs 1 angegebenen Maßnahmen gelöst.

Die neue Einrichtung gestattet die Identifikation von Regelstrecken im offenen und im geschlossenen Regelkreis. Spezielle Annahmen bezüglich der Struktur der Übertragungsfunktion sind nicht erforderlich. Die im Schritt a) erforderliche numerische Laplace-Transformation ist eine integrale Operation, die hochfrequente Meßstörungen ausmittelt. Die erforderlichen mathematischen Operationen sind an sich bekannt, z. B. aus dem Lehrbuch "Regelungstechnik" von O. Föllinger.

Anhand der Zeichnungen werden im folgenden die Erfindung sowie Weiterbildungen und Ergänzungen näher beschrieben und erläutert.

Es zeigen

Figur 1      das Prinzipschaltbild einer Einrichtung zur Parameteridentifikation,

Figur 2      Zeitdiagramme eines der Einrichtung nach Figur 1 zugeführten Sprungsignals und der Sprungantwort.

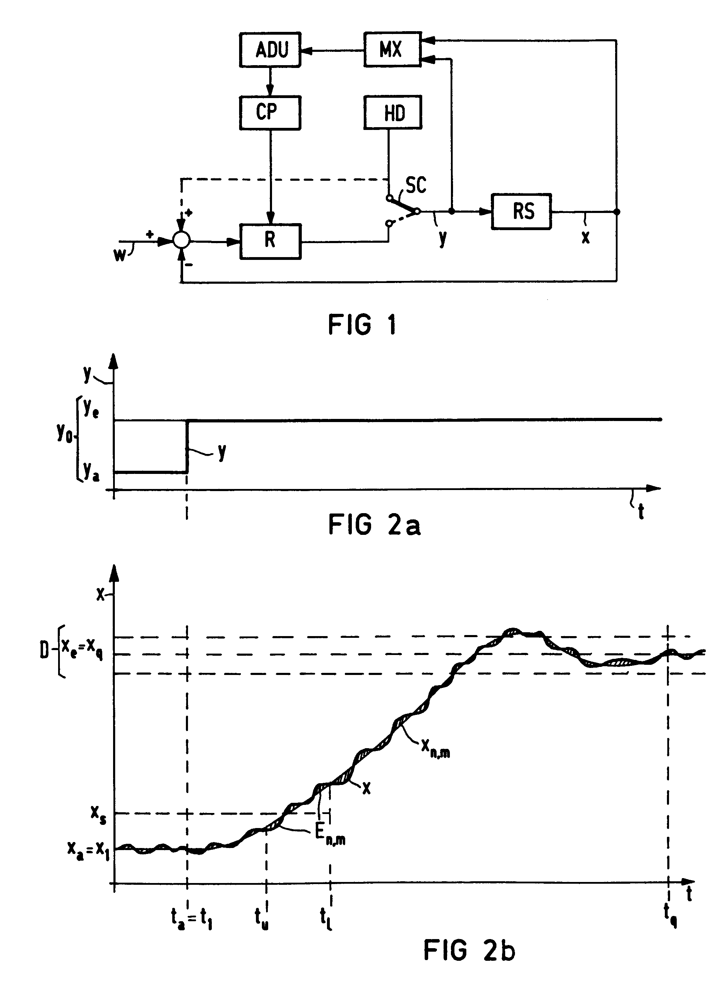

In Figur 1 ist mit RS eine Regelstrecke eines Prozesses bezeichnet, von der lediglich angenommen ist, daß ihre Übertragungsfunktion G(s) mit folgender Gleichung angenähert beschrieben werden kann:

$$G(s) = \frac{b_m s^m + b_{m-1} s^{m-1} + \ldots + b_1 s + b_0}{s^n + a_{n-1} s^{n-1} + \ldots + a_1 s + a_0}$$

Die Koeffizienten $a_i$ des Nennerpolynoms sowie die Koeffizienten $b_k$ des Zählerpolynoms sind nicht bekannt und müssen zur optimalen Einstellung eines Reglers R bestimmt werden. Diese Bestimmung erfolgt in einem Inbetriebnahmegerät CP, dem über einen Multiplexer MX und einen Analog-Digital-Umsetzer ADU das Eingangssignal y und das Ausgangssignal x der Regelstrecke RS zugeführt sind. Zunächst ist angenommen, daß das Eingangssignal, das zweckmäßig ein Sprungsignal ist, von einem Eingabegerät HD über einen Schalter SC unmittelbar dem Eingang der Regelstrecke RS zugeführt ist. Es wird jedoch noch gezeigt werden, daß es vorteilhafter ist, bei geschlossenem Regelkreis den Ausgang des Bediengerätes HD auf den Sollwerteingang des Reglers R zu schalten, wie mit einer gestrichelt gezeichneten Linie angedeutet ist. Auf den Schalter SC kann dann, zumindest für die Identifikation der Regelstrecke, verzichtet werden. Der Regler R kann ein PID-Regler sein, dessen Parameter nach der Bestimmung der Polynomkoeffizienten vom Inbetriebnahmegerät CP ermittelt und dem Regler eingegeben werden. Selbstverständlich können das Inbetriebnahmegerät CP, der Regler R, der Schalter SC, das Bediengerät HD und der Analog-Digital-Umsetzer ADU in einer zentralen Einheit zusammengefaßt sein, die auch den Sollwert w für den Regler liefert.

Figur 2a zeigt das Zeitdiagramm eines Sprungsignals y. Von einem konstanten Anfangswert $y_a$ steigt das Signal mit einer Anstiegszeit, die kurz ist im Vergleich zur Zeitkonstante der Regelstrecke RS, auf einen

EP 0 296 498 B1

konstanten Endwert $y_e$ an. Die Sprunghöhe $y_e - y_a$ ist mit $y_0$ bezeichnet. Für die Bestimmung der Polynomkoeffizienten können jedoch auch Signale mit anderen Zeitverläufen aufgeschaltet werden.

In Figur 2b veranschaulicht eine Kurve x die Sprungantwort der Regelstrecke RS. Von einem Anfangswert $x_a$ steigt sie nach einer Verzugszeit an und erreicht nach Überschwingen einen Endwert $x_e$. Wegen unvermeidlicher Störungen in der Regelstrecke hat das Signal x nicht einen glatten, sondern einen welligen Verlauf. Die Bestimmung des Endwertes $x_e$ ist daher strenggenommen ein unlösbares Problem, wenn keine Annahme über die Einschwingzeit getroffen wird. Außerdem wird der Endwert nur asymptotisch erreicht. Die durch die Störungen bedingte Welligkeit der Kurve x kann das Erreichen eines Endwertes vortäuschen. Z. B. ist nicht ohne weiteres zu den Zeitpunkten $t_k$ und $t_1$ erkennbar, ob es sich um den Endwert eines schnellen Prozesses mit kleiner Verstärkung handelt oder ob nur ein temporäres Plateau vorliegt. Zur Lösung dieses Problems wird in einer vorteilhaften Ausgestaltung der Erfindung, die sich allgemein zum Feststellen von Endwerten von Kurven mit welligem, zeitlichem Verlauf eignet, als Endwertbedingung überprüft, ob mindestens eine bestimmte Anzahl der abgetasteten Werte in einem schmalen Streifen um den letzten Wert liegt. Beispielsweise kann die Mindestanzahl die Hälfte oder ein Drittel der Werte sein; es kann aber auch eine absolute Zahl von z. B. 100 Werten angenommen werden. In Figur 2b ist dieser schmale Streifen mit D bezeichnet. Er kann z. B. 2 bis 3 % des letzten Wertes betragen. Diese Bedingung wird zum Zeitpunkt $t_q$ erreicht; der Einschwingvorgang gilt zu diesem Zeitpunkt als abgeschlossen.

Die beschriebene Endwertbedingung reicht u. U. nicht aus, den Endwert $x_e$ und den Zeitpunkt $t_q$ zuverlässig zu bestimmen; denn in den auf den Zeitpunkt $t_0$ folgenden horizontal verlaufenden Teil der Kurve x und auch noch zu Beginn des Anstiegs der Kurve, wie im Zeitpunkt $t_k$, kann die Anzahl der Punkte, deren Ordinaten nur wenig voneinander abweichen, verhältnismäßig groß im Vergleich zur Gesamtzahl der abgetasteten Werte sein, so daß die beschriebene Endwertbedingung erfüllt ist. Vorteilhaft ist daher eine Ansprechschwelle $x_s$ vorgesehen. Erst wenn diese überschritten ist, werden die Werte auf das Endwertkriterium überprüft. Das Einführen der Ansprechschwelle ist auch deshalb zweckmäßig, weil erst darüber das Nutz-/Störsignalverhältnis so groß ist, daß die Sprungantwort vernünftig ausgewertet werden kann.

Die Kurve x wird vom Analog-Digital-Umsetzer DAU zu Zeitpunkten $t_i$ abgetastet; die Abtastwerte werden mit $x_i$ und die zugehörigen Eingangssignalwerte mit $y_i$ bezeichnet. Das Übertragungsverhalten der Regelstrecke RS wird daher mit Wertetripeln $y_i$, $x_i$, $t_i$ beschrieben. Bei äquidistanten Abtastzeitpunkten $t_i$ brauchen diese nicht gesondert erfaßt werden, da sich dann aus der Anzahl der Abtastungen der jeweilige Abtastzeitpunkt ergibt.

Damit die Auswertung zeitlich von der Meßwerterfassung entkoppelt werden kann, muß eine ausreichend große Anzahl von Abtastwerten abgespeichert werden. Da für die Abspeicherung nur ein begrenzter Speicherbereich zur Verfügung steht und die Einschwingzeit, die zwischen einigen Millisekunden und mehreren Stunden betragen kann, zu Beginn der Abtastung auch nicht näherungsweise bekannt ist, kann zunächst die Abtastrate nicht passend gewählt werden. Zur Lösung dieses Problems wird ein Verfahren vorgeschlagen, das allgemein zum Abspeichern von Reihen von Werten unbekannter Anzahl in einen vorgegebenen Speicherbereich geeignet ist. Bei diesem Verfahren wird nach dem Start das aufzunehmende Signal zunächst mit der höchstmöglichen Abtastrate erfaßt, und die Abtastwerte werden, gegebenenfalls einschließlich der zugehörigen Zeitwerte, abgespeichert. Sobald der verfügbare Speicherbereich gefüllt ist, ohne daß das Endekriterium erreicht ist, wird eine Datenkomprimierung der gespeicherten Werte vorgenommen. Diese kann z. B. darin bestehen, daß jeder zweite Wert verworfen wird. Damit wird die Hälfte der Speicherplätze zur Aufnahme weiterer Meßwerte frei. Die Abtastung wird dann entweder unverändert in der schnellstmöglichen Weise fortgesetzt, wobei aber nur noch jeder zweite Wert gespeichert wird, oder die Abtastrate wird halbiert und jeder Wert gespeichert. Hat die Gesamtzahl der Speicherwerte erneut die maximal zulässige Grenze ohne Ansprechen eines Endwertkriteriums erreicht, werden die gespeicherten Werte abermals komprimiert. In den frei gewordenen Speicherbereich wird dann, falls die Abtastrate unverändert bleibt, nur noch jeder vierte Wert eingetragen oder die Abtastrate wird nochmals halbiert und alle Abtastwerte gespeichert. Dieses Verfahren wird bis zum Erreichen des Endekriteriums fortgesetzt. Als Ergebnis hat man dann eine vorgegebene Anzahl zeitlich geordneter Abtastwerte des gesamten aufzunehmenden Signals, dessen Dauer zunächst völlig unbekannt war. Die Anzahl der so gespeicherten Abtastwerte sei q mit den Anfangswerten $y_a$, $x_a$, $t_a$ und den Endwerten $y_q$, $x_q$, $t_q$.

In dem erwähnten einfachen Beispiel wurde zur Datenreduzierung jeder zweite Meßwert nach jedem Vollschreiben des Speicherbereiches ersatzlos gestrichen. Selbstverständlich sind auch andere Datenkomprimierverfahren, wie Mittelung von jeweils zwei aufeinanderfolgenden Meßwerten, möglich. Je kleiner die Maximalzahl der gespeicherten Meßwerte ist, desto sinnvoller sind solche, welche die Informationen aller Meßwerte einbeziehen.

Vorteilhaft ist die maximale Anzahl der gespeicherten Meßwerte bzw. der Zellen des vorgegebenen Speicherbereichs ungerade. Der erste Meßwert ist der Anfangswert $x_0$, der nicht gelöscht oder verändert wird. Die Anzahl der übrigen Werte ist geradzahlig, so daß zur Datenkomprimierung je ein Wertepaar zu einem neuen Wert zusammengefaßt werden kann.

Wie schon erwähnt, ist als Modell angenommen, daß die Übertragungsfunktion $G(s)$ der Regelstrecke eine gebrochen rationale Funktion ist:

$$G(s) = \frac{b_m s^m + b_{m-1} s^{m-1} + \ldots + b_1 s + b_0}{s^n + a_{n-1} s^{n-1} + \ldots a_1 s + a_0}$$

Zur Identifikation der Regelstrecke müssen die Polynomkoeffizienten $a_i$, $b_k$ bestimmt werden. Durch Multiplikation mit dem Nennerpolynom erhält man für den Vektor der gesuchten Polynomkoeffizienten $a_i$, $b_k$ die lineare Gleichung

$$G(s)\, s^n = \left| -s^{n-1} G(s), \ldots, -sG(s), -G(s), s^m, \ldots, s, 1 \right| \begin{bmatrix} a_{n-1} \\ a_{n-2} \\ \cdot \\ \cdot \\ a_1 \\ a_0 \\ b_m \\ \cdot \\ \cdot \\ b_1 \\ b_0 \end{bmatrix}$$

Zur Ermittlung der $n+m+1$ Koeffizienten ist ein System von mindestens ebensovielen Gleichungen erforderlich, die man durch Einsetzen von s-Werten $s_1$, $s_2$ ... $s_p$ erhält. Zweckmäßig sind die s-Werte reell. Für jeden s-Wert $s_1$, $s_2$ ... $s_p$ gibt es ein Übertragungsfunktionswert $G_1$, $G_2$,... $G_p$. Zu dessen Errechnung wird vom Laplace-Integral

$$G_j = \int_0^\infty g(t)\, e^{-s_j t}\, dt$$

ausgegangen, in dem $g(t)$ die sogenannte Gewichtsfunktion ist. Wegen der endlichen Anzahl q der Meßwerte $y_i$, $x_i$, $t_i$ wird aus dem Laplace-Integral die Summe

$$G_j = \sum_{i=1}^{q} g_i\, e^{-s_j t_i}\, (t_i - t_{i-1})$$

Die Gewichtsfunktion kann aus der bekannten Beziehung für das Faltungsintegral

4

$$x(t) = \int_0^t g(v) \; y(t-v) \; dv$$

gewonnen werden:

$$x_i = \sum_{k=0}^{i-1} g_k \; y_{i-k} \; (t_{k+1} - t_k)$$

Aus den gemessenen Wertetripeln $x_i$, $y_i$, $t_i$ können die Werte $g_i$ der Gewichtsfunktion berechnet werden. Die Gleichungen für die Gewichtsfunktionen und damit auch die für die Übertragungsfunktionen werden besonders einfach, wenn der Regelstrecke als Eingangssignal ein Sprungsignal der Höhe $y_0$ zugeführt wird. In diesem Fall sind die Sprungantwortwerte

$$h_i = \frac{x_i - x_a}{y_0}, \quad i = 1, \dots, q$$

Die Werte für die Gewichtsfunktion werden nach der Gleichung

$$g_i = \frac{h_i - h_{i-1}}{t_i - t_{i-1}}$$

berechnet. Die Gleichungen für die Übertragungsfunktionswerte erhalten die einfache Form:

$$G_j = \sum_{i=1}^q (h_i - h_{i-1}) \; e^{-s_j t_i}$$

Werden für die s-Werte $s \dots s_p$ eingesetzt, so erhält man p Werte $G_1$, $G_2 \dots G_p$ für die Übertragungsfunktion und damit folgendes überbestimmtes Gleichungssystem:

5

$$\begin{bmatrix} -s_1^{n-1}G_1, \ldots, -s_1G_1, -G_1, \; s_1^m, \ldots, s_1, 1 \\ -s_2^{n-1}G_2, \ldots, -s_2G_2, -G_2, \; s_2^m, \ldots, s_2, 1 \\ \;\; \cdot \qquad\qquad \cdot \quad \cdot \quad \cdot \qquad \cdot \quad \cdot \\ \;\; \cdot \qquad\qquad \cdot \quad \cdot \quad \cdot \qquad \cdot \quad \cdot \\ \;\; \cdot \qquad\qquad \cdot \quad \cdot \quad \cdot \qquad \cdot \quad \cdot \\ \;\; \cdot \qquad\qquad \cdot \quad \cdot \quad \cdot \qquad \cdot \quad \cdot \\ -s_p^{n-1}G_p, \ldots, -s_pG_p, -G_p, \; s_p^m, \ldots, s_p, 1 \end{bmatrix} \begin{bmatrix} a_{n-1} \\ a_{n-2} \\ \cdot \\ a_0 \\ b_m \\ \cdot \\ b_0 \end{bmatrix} = \begin{bmatrix} G_1 \, s_1^n \\ G_2 \, s_2^n \\ \cdot \\ \cdot \\ \cdot \\ \cdot \\ G_p \, s_p^n \end{bmatrix} \qquad (1)$$

oder in abgekürzter Schreibweise:

$$\underline{A}\,\underline{X} = \underline{B}$$

Mit diesem Gleichungssystem wird die Beziehung zwischen den Meßwerten $y_i$, $x_i$, $t_i$ und dem Streckenmodell hergestellt. Da die Meßwerte mit Störungen behaftet sind, ist das Gleichungssystem im allgemeinen nicht exakt lösbar, auch dann nicht, wenn $p = n + m + 1$ ist. Man muß sich daher mit einer Näherungslösung begnügen. Der Einfluß der Störungen auf die ermittelten Koeffizienten ist dabei um so geringer, je größer die Anzahl q der Meßwerte $y_i$, $x_i$, $t_i$ und die Anzahl p der s-Werte im Verhältnis zur Anzahl $n + m + 1$ der Koeffizienten gewählt ist. Man erhält dann ein überbestimmtes Gleichungssystem, das nach bekannten numerischen Methoden gelöst werden kann.

Vorteilhaft wird zur Lösung dieses Gleichungssystems das sogenannte PENROSE-Theorem und das Konzept der pseudoinversen Matrix herangezogen. Dies führt zur Minimum-Norm-Lösung

$$\underline{X} = (\underline{A}^T\underline{A})^{-1}\,\underline{A}^T\underline{B}$$

Darin ist $\underline{A}^T$ die transponierte Matrix $\underline{A}$ und $(\underline{A}^T\underline{A})^{-1}$ die inverse Matrix des Produktes $\underline{A}^T\underline{A}$. Diese Lösung ist mit der nach der Methode der kleinsten Fehlerquadrate ermittelten bestmöglichen Näherungslösung identisch. Mit den Koeffizienten $a_i$, $b_k$ ist das Modell für das Übertragungsverhalten der Regelstrecke bestimmt. Auf der Grundlage dieses Streckenmodells kann der Regler nach bekannten Verfahren entworfen werden.

Bei dem bisher beschriebenen Verfahren werden die Polynomgrade n, m zu Beginn festgelegt. Nach einer Weiterbildung des Verfahrens werden diejenigen Gradzahlen n, m ermittelt, die nicht größer als notwendig sind, die Regelstrecke aber dennoch mit ausreichender Genauigkeit beschreiben. Diese Weiterbildung besteht darin, daß für vorgegebene Polynomgrade n, m, von denen n größer m ist, z. B. von n = 1, m = 0 bis n = 10, m = 5 nach dem oben angegebenen Verfahren Koeffizienten $a_{n,m,i}$ und $b_{n,m,k}$ berechnet werden, und zwar zweckmäßig beginnend mit den niedrigsten Gradzahlen, also z. B. n = 1, m = 0. Mit jedem Satz der Koeffizienten werden unter Verwendung der in der Regelungstechnik bekannten Zustandsdifferentialgleichungen Werte $x_{n,m,i}$ bzw. $h_{n,m,i}$ der Übertragungsfunktion berechnet, und zwar mit den Zeitpunkten $t_i$, zu denen die Übergangsfunktionen aufgenommen wurde. Die errechneten Übergangsfunktionswerte $x_{n,m,i}$ bzw. $h_{n,m,i}$ werden mit den gemessenen $x_i$ bzw. $h_i$ verglichen, z. B. durch die Summenbildung

$$E_{n,m} = \sum_{i=0}^{q} \; | x_i - x_{n,m,i} | \quad bzw.$$

$$E_{n,m} = \sum_{i=0}^{q} |h_i - h_{n,m,i}|$$

Die Summen $E_{n,m}$ sind ein Maß für die Fehlerfläche zwischen der berechneten und der gemessenen Übergangsfunktion, d. h. für die Güte der Identifikation. In Figur 2b ist eine Kurve $x_{n,m}$ eingetragen. Die Fehlerfläche $E_{n,m}$ zwischen dieser Kurve und der gemessenen Kurve x ist schraffiert. Nach jeder Ermittlung einer Fehlerfläche $E_{n,m}$ werden die Gradzahlen n, m schrittweise erhöht, und mit den erhöhten Gradzahlen wird abermals die Fehlerfläche $E_{n,m}$ ermittelt. Dabei können die zum Aufbau des überbestimmten Glei-chungssystems benötigten Übertragungsfunktionswerte $G_1$ ... $G_p$ für jede Kombination n, m wieder verwendet werden, da sie nur aus den gemessenen Werten $x_i$ bzw. $h_i$ errechnet werden.

Bei dem bisher beschriebenen Verfahren war der Regelkreis mit dem Schalter SC aufgetrennt. Prinzipiell ist die Identifikation der Regelstrecke auch bei geschlossenem Regelkreis möglich, wozu das Eingangssignal y und das Antwortsignal x gemessen werden. Die Gewichtsfunktion muß jedoch durch Entfaltung gewonnen werden, was nicht nur aufwendig, sondern auch wegen des differenzierenden Charakters der Entfaltung und der zwei gestörten Größen x, y problematisch ist. Nach einer Weiterbildung der Erfindung wird zur Identifikation der Regelstrecke im geschlossenen Regelkreis, der einen Regler mit bekannten Parametern enthält, ein definiertes Signal, zweckmäßig ein Sprungsignal der Höhe $w_0$, dem Sollwerteingang des Reglers R zugeführt. Spezielle Werte der Übertragungsfunktion des geschlossenen Regelkreises ergeben sich aus der Gleichung

$$G_{r,j} = \sum_{i=1}^{q} g_{r,i}\, e^{-s_j t_i} (t_i - t_{i-1})$$

Für den Spezialfall eines Sprungsignals am Eingang mit der Sprungantwort $h_i$ wird:

$$G_{r,j} = \sum_{i=1}^{q} (h_i - h_{i-1})\, e^{-s_j t_i}$$

Wie beim oben beschriebenen Verfahren können nach Auswahl von mehreren, z. B. 20 Werten $s_j$, die möglichst reell sein sollen, Übertragungsfunktionswerte $G_{r,j}$ berechnet werden. Da die Übertragungsfunktion R(s) des Reglers bekannt ist, können aus den Übertragungsfunktionwerten $G_{r,j}$ des geschlossenen Regel-kreises die Übertragungsfunktionswerte $G_j$ der Regelstrecke nach der Gleichung

$$G_j = \frac{G_{r,j}}{(1 - G_{r,j})\, R_j}$$

berechnet werden. Diese Werte werden in das Gleichungssystem (1) eingesetzt, und es werden wieder die Koeffizienten $a_i$, $b_k$ der Übertragungsfunktion des Streckenmodells erhalten.

Zur Erläuterung der Erfindung und ihrer Weiterbildungen wurde ein Beispiel aus der Regelungstechnik gewählt, bei dem eine Regelstrecke identifiziert wurde. Selbstverständlich können auch andere Übertragungsstrecken mit dem neuen Verfahren identifiziert werden. Auch können im Rahmen der Erfindung die angegebenen Gleichungen zu ihrer Lösung umgeformt werden.

**Patentansprüche**

1. Einrichtung zur Parameteridentifikation einer Übertragungsstrecke (RS), insbesondere einer Regelstrek-ke, mit Hilfe eines mathematischen Streckenmodells, wobei die Ein- und Ausgangssignale (y, x) der

Übertragungsstrecke zu Abtastzeitpunkten ($t_i$) als Wertepaare ($y_i$, $x_i$) erfaßt werden und mit den erfaßten Werten die Parameter des Streckenmodells bestimmt werden, mit einem Inbetriebnahmegerät (CP), dem über einen Multiplexer (MX) und einen Analog-Digital-Umsetzer (ADU) das Eingangssignal (y) und das Ausgangssignal (x) der Übertragungsstrecke (RS) zugeführt sind, **dadurch gekennzeichnet, daß** das Streckenmodell eine allgemeine gebrochene rationale Übertragungsfunktion mit den Polynomkoeffizienten $a_i$, $b_k$

$$G(s) = \frac{b_m s^m + b_{m-1} s^{m-1} + \ldots + b_1 s + b_0}{s^n + a_{n-1} s^{n-1} + \ldots + a_1 s + a_0}$$

besitzt, und das Inbetriebnahmegerät (CP) Mittel aufweist zum

a) Berechnen von Gewichtsfunktionen $g_i$ aus dem sogenannten Faltungsintegral

$$x_i = \sum_{k=0}^{i-1} g_k \, y_{i-k} \, (t_{k+1} - t_k)$$

b) Berechnen von Übergangsfunktionswerten $G_j$ für $j = 1 \ldots p$ aus der Beziehung

$$G_j = \sum_{i=1}^{q} g_i \, e^{-s_j t_i} \, (t_i - t_{i-1})$$

c) Bilden eines linearen Gleichungssystems aus der Gleichung für die Übertragungsfunktion

$$G_j = \frac{b_m s_j^m + b_{m-1} s_j^{m-1} + \ldots + b_1 s_j + b_0}{s_j^n + a_{n-1} s_j^{n-1} + \ldots \ldots + a_1 s_j + a_0}$$

mit den Wertepaaren $s_j$, $G_j$ aus Schritt b), wobei $m + n + 1$ kleiner p und n größer m ist;

d) Bestimmen der Polynomkoeffizienten $a_i$, $b_k$ durch Lösen des linearen Gleichungssystems.

**2.** Einrichtung nach Anspruch 1, **dadurch gekennzeichnet, daß** das Inbetriebnahmegerät Mittel aufweist zum

a) Ermitteln von Polynomkoeffizienten $a_{n,m,i}$ und $b_{n,m,k}$ für mehrere Polynomgrade n, m;

b) Berechnen der Ausgangssignale $x_{n,m,i}$ für jeden Satz von nach Schritt a) ermittelten Polynomkoeffizienten;

c) Errechnen der Abweichungen $E_{n,m}$ der gemessenen Ausgangssignale $x_i$ von den errechneten Ausgangssignalen $x_{n,m,i}$ für mehrere Polynomgradpaare n, m;

d) Auswählen der Polynomkoeffizienten zu dem Polynomgradpaar n, m, bei dem die Abweichung am kleinsten ist.

**3.** Einrichtung nach Anspruch 2, **dadurch gekennzeichnet, daß** die Mittel die Abweichungen $E_{n,m'}$ beginnend mit den Polynomgraden $n = 1$ $m = 0$, mit zunehmenden Gradzahlen ermitteln und das Verfahren abbrechen, wenn die Abweichung $E_{n,m}$ einen vorgegebenen Grenzwert unterschreitet.

**4.** Einrichtung nach Anspruch 2 oder 3**, dadurch gegennzeichnet,** daß die Mittel die Abweichungen $E_{n,m}$ mit der Gleichung

$$E_{n,m} = \sum_{i=1}^{q} |x_i - x_{n,m,i}|$$

berechnen.

5. Einrichtung nach einem der Ansprüche 1 bis 4, **dadurch gekennzeichnet,** daß eine Eingabeeinheit (HD) vorhanden ist, die als Eingangssignal ein Sprungsignal der Höhe $y_0$ der Übertragungsstrecke zuführt, die als Ausgangssignal die Übergangsfunktion x liefert, was Sprungantwortwerten

$$h_i = \frac{x_i - x_0}{y_0}$$

entspricht, und daß das Inbetriebnahmegerät Mittel zum Berechnen der Übertragungsfunktion $G_j$ für $j = 1 \dots p$ aus der Beziehung

$$G_j = \sum_{i=1}^{q} (h_i - h_{i-1}) \, e^{-s_j \, t_i}$$

aufweist.

6. Einrichtung nach den Ansprüchen 4 und 5, **dadurch gekennzeichnet,** daß die Mittel die Abweichungen $E_{n,m}$ nach der Gleichung

$$E_{n,m} = \sum_{i=1}^{q} |h_i - h_{n,m,i}|$$

berechnen.

7. Einrichtung nach einem der Ansprüche 1 bis 6, **dadurch gekennzeichnet,** daß im Falle, daß die Übertragungsstrecke eine Regelstrecke ist, die in einen geschlossenen Regelkreis mit einem Regler mit bekannter Übertragungsfunktion R(s) geschaltet ist, dessen Sollwerteingang das Eingangssignal $w_0$ zugeführt ist, Mittel zum Berechnen der Übertragungsfunktionswerte $G_{r,j}$ für $j = 1 \dots p$ aus der Beziehung

$$G_{r,j} = \sum_{i=1}^{q} g_{r,i} \, e^{-s_j \, t_i} (t_i - t_{i-1})$$

und zum Umrechnen der Übertragungsfunktionswerte $G_{r,j}$ des geschlossenen Regelkreises in die Übertragungsfunktionswerte $G_j$ der Regelstrecke mit der Gleichung

$$G_j = \frac{G_{r,j}}{(1 - G_{r,j}) \, R_j}$$

vorhanden sind.

**8.** Einrichtung nach einem der Ansprüche 1 bis 7, **dadurch gekennzeichnet,** daß Mittel vorhanden sind, die folgendes lineares Gleichungssystem bilden:

$$
\begin{bmatrix}
-s_1^{n-1}G_1, \ldots, -s_1 G_1, -G_1, & s_1^m, \ldots, s_1, 1 \\
-s_2^{n-1}G_2, \ldots, -s_2 G_2, -G_2, & s_2^m, \ldots, s_2, 1 \\
\vdots \quad\quad \vdots \quad \vdots \quad \vdots \quad\quad \vdots \quad \vdots \\
-s_p^{n-1}G_p, \ldots, -s_p G_p, -G_p, & s_p^m, \ldots, s_p, 1
\end{bmatrix}
\begin{bmatrix}
a_{n-1} \\
a_{n-2} \\
\vdots \\
a_0 \\
b_m \\
\vdots \\
b_0
\end{bmatrix}
=
\begin{bmatrix}
G_1 \; s_1^n \\
G_2 \; s_2^n \\
\vdots \\
\vdots \\
G_p \; s_p^n
\end{bmatrix}
\tag{1}
$$

(in gekürzter Schreibweise: $\underline{A} \cdot \underline{X} = B$) und nach den Koeffizienten $a_i$, $b_k$ mit der Gleichung

$$\underline{X} = (\underline{A}^T\underline{A})^{-1}\,\underline{A}^T B, \text{ lösen,}$$

worin $\underline{A}^T$ die transponierte Matrix $\underline{A}$ und $(\underline{A}^T\underline{A})^{-1}$ die inverse Matrix des Produktes der Matrix $\underline{A}^T$ mit der Matrix $\underline{A}$ ist.

**9.** Einrichtung nach einem der Ansprüche 1 bis 8, **dadurch gekennzeichnet,** daß der Analog-Digital-Umsetzer (ADU) die Ausgangssignale ($y_i$, $x_i$) zu den Zeitpunkten $t_i$ abtastet und daß das Inbetriebnahmegerät Mittel zum Erkennen des Endwertes ($x_e$) der Ausgangssignale ($x_i$) enthält, wobei der Endwert $x_e$ als erreicht gilt, wenn der Anteil der Werte, die um weniger als einen vorgegebenen Betrag vom letzten Wert abweichen, an der Gesamtzahl der Werte einen vorgegebenen Betrag, vorzugsweise die Hälfte, übersteigt.

**10.** Einrichtung nach Anspruch 9, **dadurch gekennzeichnet,** daß das Inbetriebnahmegerät (CP) einen Speicher mit einem vorgegebenen Speicherbereich enthält, in den die Meßwerte nacheinander eingetragen werden, und daß das Inbetriebnahmegerät (CP) ferner eine Einrichtung zur Datenreduktion enthält, die jedesmal dann, wenn der Speicherbereich gefüllt ist, eine Datenreduktion der gespeicherten und der folgenden neuen Werte vornimmt, bis ein Endekriterium erfüllt ist.

**11.** Einrichtung nach Anspruch 10, **dadurch gekennzeichnet,** daß der Speicherbereich eine ungerade Anzahl von Zellen enthält und zur jeweiligen Datenreduktion jeweils zwei Meßwerte zu einem Wert zusammengefaßt werden, indem jeder zweite Meßwert gelöscht wird.

**Claims**

**1.** Device for the parameter identification of a transmission length (RS), in particular of a regulating length, with the aid of a mathematical length model, wherein the input and output signals (y, x) of the transmission length at sampling instants ($t_i$) are detected as value pairs ($y_i$, $H_i$) and with the detected values the parameters of the length model are determined, having a startup device (CP), to which there are supplied via a multiplexer (MX) and an analog-to-digital converter (ADC) the input signal (y) and the output signal (x) of the transmission length (RS), characterized in that the length model has a general fractional rational transmission function with the polynominal coefficients $a_i$, $b_k$

$$G(s) = \frac{b_m s^m + b_{m-1} s^{m-1} + \ldots + b_1 s + b_0}{s^n + a_{n-1} s^{n-1} + \ldots + a_1 s + a_0}$$

and the startup device (CP) has means for

a) the calculation of weighting functions $g_i$ from the so-called convolution integral

$$x_i = \sum_{k=0}^{i-1} g_k \, y_{i-k} \, (t_{k+1} - t_k)$$

b) the calculation of transition function values $G_j$ for $j = 1 \ldots p$ from the equation

$$G_j = \sum_{i=1}^{q} g_i \, e^{-s_j \, t_i} \, (t_i - t_{i-1})$$

c) the formation of a linear equation system from the equation for the transmission function

$$G_j = \frac{b_m s_j^m + b_{m-1} \, j s^{m-1} + \ldots + b_1 s_j + b_0}{s_j^n + a_{n-1} s_j^{n-1} + \ldots + a_1 s_j + a_0}$$

with the value pairs $s_j$, $G_j$ from step b), with $m + n + 1$ being smaller than p, and n being larger than m;

d) the determination of the polynominal coefficients $a_i$, $b_k$ through the solving of the linear equation system.

2. Device according to claim 1, characterized in that the startup device has means for

a) the determination of polynominal coefficients $a_{n,m,i}$ and $b_{n,m,k}$ for several polynominal grades n, m;

b) the calculation of the output signals $x_{n,m,i}$ for each set of polynominal coefficients determined according to step a);

c) the calculation of the differences $E_{n,m}$ of the measured output signals $x_i$ from the calculated output signals $x_{n,m,i}$ for several pairs of polynominal grades n, m;

d) the selection of the polynominal coefficients for the pair of polynominal grades n, m at which the difference is smallest.

3. Device according to claim 2, characterized in that the means determine the differences $E_{n,m}$, beginning with the polynominal grades $n = 1$, $m = 0$, with increasing grade numbers and stop the process if the difference $E_{n,m}$ falls short of a specified limiting value.

4. Device according to claim 2 or 3, characterized in that the means calculate the differences $E_{n,m}$ with the equation

$$E_{n,m} = \sum_{i=1}^{q} \left| x_i - x_{n,m,i} \right| \qquad .$$

5. Device according to one of claims 1 to 4, characterized in that an input unit (HD) is present, which supplies a step signal of the height $y_o$ as input signal to the transmission length, which delivers the transition function x as output signal, corresponding to step-response values

$$h_i = \frac{x_i - x_o}{y_o} \quad ,$$

and in that the startup device has means for the calculation of the transmission function $G_j$ for j = l ... p from the equation

$$G_j = \sum_{i=1}^{q} (h_i - h_{i-1}) \; e^{-s_j t_i} \quad .$$

6. Device according to claims 4 and 5, characterized in that the means calculate the differences $E_{n,m}$ according to the equation

$$E_{n,m} = \sum_{i=1}^{q} \left| h_i - h_{n,m,i} \right| \quad .$$

7. Device according to one of claims 1 to 6, characterized in that in the event of the transmission length being a regulating length, which is connected into a closed regulating circuit by a regulator with known transmission function R(s), to whose desired value input the input signal $w_o$ is supplied, means are present for the calculation of the transmission function values $G_{r,j}$ for j = 1...p from the equation

$$G_{r,j} = \sum_{i=1}^{q} g_{r,i} \; e^{-s_j t_i} (t_i - t_{i-1})$$

and for the conversion of the transmission function values $G_{r,j}$ of the closed regulating circuit into the transmission function values $G_j$ of the regulating length with the equation

$$G_j = \frac{G_{r,j}}{(1 - G_{r,j}) \; R_j} \quad .$$

8. Device according to one of claims 1 to 7, characterized in that means are present which form the following linear equation system:

$$
\begin{bmatrix}
-s_1^{n-1}G_1, \ldots, -s_1G_1, -G_1, s_1^m, \ldots, s_1, 1 \\
-s_2^{n-1}G_2, \ldots, -s_2G_2, -G_2, s_2^m, \ldots, s_2, 1 \\
\vdots \qquad \vdots \quad \vdots \quad \vdots \qquad \vdots \quad \vdots \\
\vdots \qquad \vdots \quad \vdots \quad \vdots \qquad \vdots \quad \vdots \\
\vdots \qquad \vdots \quad \vdots \quad \vdots \qquad \vdots \quad \vdots \\
-s_p^{n-1}G_p, \ldots, -s_pG_p, -G_p, s_p^m, \ldots, s_p, 1
\end{bmatrix}
\begin{bmatrix}
a_{n-1} \\ a_{n-2} \\ \vdots \\ a_0 \\ b_m \\ \vdots \\ b_0
\end{bmatrix}
=
\begin{bmatrix}
G_1\, s_1^n \\ G_2\, s_2^n \\ \vdots \\ \vdots \\ \vdots \\ G_p\, s_p^n
\end{bmatrix}
$$

(in shortened style: $\underline{A} \cdot \underline{X} = \underline{B}$) and which solve according to the coefficients $a_i$, $b_k$ with the equation

$$\underline{X} = (\underline{A}^T\underline{A})^{-1}\,\underline{A}^T\underline{B},$$

wherein $\underline{A}^T$ is the transposed matrix $\underline{A}$ and $(\underline{A}^T\underline{A})^{-1}$ is the inverse matrix of the product of the matrix $\underline{A}^T$ with the matrix $\underline{A}$.

9. Device according to one of claims 1 to 8, characterized in that the analog-to-digital converter (ADC) samples the output signals $(y_i, x_i)$ at the instants $t_i$ and that the startup device contains means for the recognition of the final value $(x_e)$ of the output signals $(x_i)$, with the final value $x_e$ counting as reached if the portion of the values which differ from the last value by less than a specified amount exceeds a specified amount, preferably half, of the total number of values.

10. Device according to claim 9, characterized in that the startup device (CP) contains a memory with a specified memory range, into which the measured values are successively entered, and that the startup device (CP), moreover, contains a device for data reduction, which, every time the memory range is filled, carries out a data reduction of the stored and of the subsequent new values until an end criterion is fulfilled.

11. Device according to claim 10, characterized in that the memory range contains an uneven number of cells and for the respective data reduction in each case two measured values are combined into one value, in that each second measured value is erased.

## Revendications

1. Dispositif pour identifier les paramètres d'une section de transmission (RS), notamment d'une section de régulation, à l'aide d'un modèle mathématique de la section, dans lequel les signaux d'entrée et de sortie (y,x) de la section de transmission sont détectés à des instants d'échantillonnage ($t_i$) sous la forme de couples de valeurs ($y_i$, $x_i$) et les paramètres du modèle de la section étant déterminés avec les valeurs détectées, et qui comporte un appareil de mise en service (CP), auquel sont envoyés par l'intermédiaire d'un multiplexeur (MX) et d'un convertisseur analogique/numérique (ADU), le signal d'entrée (y) et le signal de sortie (x) de la section de transmission (RS), caractérisé par le fait que le modèle de la section est une fonction de transmission générale fractionnelle et rationnelle ayant pour coefficients $a_i$, $b_k$ de polynôme

13

EP 0 296 498 B1

$$G(s) = \frac{b_m s^m + b_{m-1} s^{m-1} + \ldots + b_1 s + b_0}{s^n + a_{n-1} s^{n-1} + \ldots + a_1 s + a_0}$$

et que l'appareil de mise en service (CP) comprend des moyens pour
a) calculer des fonctions de pondération $g_i$ à partir de ce qu'on appelle l'intégrale de convolution

$$x_i = \sum_{k=0}^{i-1} g_k \, y_{i-k} \, (t_{k+1} - t_k)$$

b) calculer des valeurs $G_j$ de la fonction de transfert pour $j = 1 \ldots p$ à partir de la relation

$$G_j = \sum_{i=1}^{q} g_i \, e^{-s_j \, t_i} \, (t_i - t_{i-1})$$

c) former un système d'équations linéaires à partir de l'équation donnant la fonction de transfert

$$G_j = \frac{b_m s_j^m + b_{m-1} \, _j s^{m-1} + \ldots + b_1 s_j + b_0}{s_j^n + a_{n-1} s_j^{n-1} + \ldots \ldots + a_1 s_j + a_0}$$

avec les couples de valeurs $s_j$, $G_j$ de l'étape b), avec $m + n + 1$ inférieur à p et n supérieur à m;
d) déterminer les coefficients $a_i$, $b_k$ des polynômes en résolvant un système d'équations linéaires.

2. Dispositif suivant la revendication 1, caractérisé par le fait que l'appareil de mise en service comprend des moyens pour
a) déterminer des coefficients de polynômes $a_{n,m,i}$ et $b_{n,m,k}$ pour plusieurs degrés n, m des polynômes;
b) calculer les signaux de sortie $x_{n,m,i}$ pour chaque ensemble de coefficients de polynômes déterminés lors de l'étape a);
c) calculer les écarts $E_{n,m}$ des signaux de sortie $x_i$ mesurés à partir des signaux de sortie calculés $x_{n,m,i}$ pour plusieurs degrés de polynômes n, m;
d) sélectionner les coefficients des polynômes pour le couple n, m de degrés des polynômes, pour lequel l'écart est minimum.

3. Dispositif suivant la revendication 2, caractérisé par le fait que les moyens déterminent les écarts $E_{n,m}$, en commençant par les degrés de polynômes $n = 1$, $m = 0$, avec des degrés croissants, et interrompent le procédé lorsque l'écart $E_{n,m}$ tombe au-dessous d'une valeur limite prédéterminée.

4. Dispositif suivant la revendication 2 ou 3, caractérisé par le fait que les moyens calculent les écarts $E_{n,m}$ conformément à la relation

$$E_{n,m} = \sum_{i=1}^{q} |x_i - x_{n,m,i}|$$

14

**5.** Dispositif suivant l'une des revendications 1 à 4, caractérisé par le fait qu'il est prévu une unité d'entrée (HD), qui envoie, en tant que signal d'entrée, un signal échelon de hauteur $y_o$ à la section de transmission, qui délivre, en tant que signal de sortie, la fonction de transfert x, ce qui correspond à des valeurs de réponse échelon

$$h_i = \frac{x_i - x_0}{y_0}$$

et que l'appareil de mise en service comporte des moyens pour calculer la fonction de transfert Gj pour j = 1 ... p à partir de la relation

$$G_j = \sum_{i=1}^{q} (h_i - h_{i,j}) \; e^{-s_j \, t_i}$$

**6.** Dispositif suivant les revendications 4 et 5, caractérisé par le fait que les moyens calculent les écarts $E_{n,m}$ conformément à la relation

$$E_{n,m} = \sum_{i=1}^{q} |h_i - h_{n,m,i}|$$

**7.** Dispoistif suivant l'une des revendications 1 à 6, caractérisé par le fait que dans le cas où la section de transmission est une section de régulation, qui est branchée dans un circuit de régulation fermé comportant un régulateur ayant une fonction de transfert R(s) connue et à l'entrée de la valeur de consigne duquel est envoyé le signal d'entrée $w_o$, il est prévu des moyens servant à calculer des valeurs $G_{r,j}$ de la fonction de transfert pour j = 1 ... p à partir de la relation

$$G_{r,j} = \sum_{i=1}^{q} g_{r,i} \; e^{-s_j t_i} \; (t_i - t_{i-1})$$

et pour convertir les valeurs $G_{r,j}$ de la fonction de transfert du circuit de régulation fermé en les valeurs $G_j$ de la fonction de transmission de la section de régulation au moyen de la relation

$$G_j = \frac{G_{r,j}}{(1 - G_{r,j}) \; R_j}$$

**8.** Dispositif suivant l'une des revendications 1 à 7, caractérisé par le fait qu'il est prévu des moyens qui forment le système d'équations linéaires suivant :

$$
\begin{bmatrix}
-s_1^{n-1}G_1, \ldots, -s_1 G_1, -G_1, & s_1^{m}, \ldots, s_1, 1 \\
-s_2^{n-1}G_2, \ldots, -s_2 G_2, -G_2, & s_2^{m}, \ldots, s_2, 1 \\
\cdot & \cdot \quad \cdot \quad \cdot \quad \cdot \quad \cdot \\
\cdot & \cdot \quad \cdot \quad \cdot \quad \cdot \quad \cdot \\
\cdot & \cdot \quad \cdot \quad \cdot \quad \cdot \quad \cdot \\
-s_p^{n-1}G_p, \ldots, -s_p G_p, -G_p, & s_p^{m}, \ldots, s_p, 1
\end{bmatrix}
\begin{bmatrix}
a_{n-1} \\ a_{n-2} \\ \cdot \\ a_0 \\ b_m \\ \cdot \\ b_0
\end{bmatrix}
=
\begin{bmatrix}
G_1 s_1^{n} \\ G_2 s_2^{n} \\ \cdot \\ \cdot \\ \cdot \\ \cdot \\ G_p s_p^{n}
\end{bmatrix}
\quad (1)
$$

(en écriture abrégée : $\underline{A} . \underline{X} = \underline{B}$) et résolvent ce système d'équations en fonction des coefficients $a_i$, $b_k$ conformément à la relation

$$\underline{x} = (\underline{A}^T\underline{A})^{-1}\,\underline{A}^T B,$$

$\underline{A}^T$ étant la transposée de la matrice $\underline{A}$, et $(\underline{A}^T\underline{A})^{-1}$ étant l'inverse de la matrice du produit de la matrice $\underline{A}^T$ par la matrice $\underline{A}$.

**9.** Dispositif suivant l'une des revendications 1 à 8, caractérisé par le fait que le convertisseur analogique/numérique (ADU) échantillonne les signaux de sortie $(y_i, x_i)$ aux instants $t_i$ et que l'appareil de mise en service comporte des moyens pour identifier la valeur finale $(x_e)$ des signaux de sortie $(x_i)$, la valeur finale $x_i$ étant considérée comme atteinte lorsque le pourcentage des valeurs, qui s'écartent de moins d'une valeur prédéterminée par rapport à la dernière valeur, rapporté au nombre total des valeurs dépasse une valeur prédéterminée, de préférence la moitié.

**10.** Dispositif suivant la revendication 9, caractérisé par le fait que l'appareil de mise en service (CP) comporte une mémoire possédant une zone de mémoire prédéterminée, dans laquelle les valeurs de mesure sont introduites successivement, et que l'appareil de mise en service (CP) comporte en outre un dispositif pour réduire les données et qui, chaque fois que la zone de mémoire est remplie, exécute une réduction des données des valeurs mémorisées et des nouvelles valeurs suivantes, jusqu'à ce qu'un critère de fin soit satisfait.

**11.** Dispositif suivant la revendication 10, caractérisé par le fait que la zone de mémoire comporte un nombre impair de cellules et que, pour la réduction respective des données, respectivement deux valeurs de mesure sont rassemblées pour former une valeur, par le fait que chaque seconde valeur de mesure est effacée.

FIG 1

FIG 2a

FIG 2b